# EUROPEAN PATENT APPLICATION

(11) **EP 2 424 072 A2**
(43) Date of publication of application: **29.02.2012**
(21) Application number: 10190035.5
(22) Date of filing: 04.11.2010
(51) Int. Cl.: H02J 7/02, H01M 10/44

(54) **Mobile terminal and wireless charging method thereof**

(30) Priority: 30.08.2010 KR 20100084409
(71) Applicant: LG Electronics, Seoul, 150-721 (KR)
(72) Inventor: Park, Sekwon, Gyeonggi-Do (KR)
(74) Representative: Cabinet Plasseraud

(57) **Abstract**

The invention relates to a mobile terminal and a wireless charging method thereof, in which when the mobile terminal performs a wireless charging of a battery using induced current generated from a charging pad, whether the terminal is in a vibration mode is checked, and if so, the vibration mode is changed into a ring mode or a mute mode to receive the induced current, thereby charging the battery, resulting in preventing lowering of charging efficiency, which is caused because the terminal does not meet an alignment condition due to vibration generated from the terminal.

## Description

### FIELD OF THE INVENTION

The present invention relates to a mobile terminal, which change a ringtone of the terminal, set to a vibration mode, into a ring mode so as to perform a wireless charging operation, and a wireless charging method thereof.

### DESCRIPTION OF THE RELATED ART

As terminals, such as computers, laptop computers, mobile phones and the like, become multifunctional, the terminals can be allowed to capture still images or moving images, play music or video files, play games, receive broadcast and the like, so as to be implemented as an integrated multimedia player.

In general, terminals may be divided into a mobile terminal and a stationary terminal according to their mobilities. The mobile terminal may then be categorized into a handheld terminal and a vehicle mounted terminal according to whether a user can carry it around.

Such a mobile terminal typically utilizes a battery for portability. Charging the battery may be done by a wired charging and a wireless charging, and the wired charging is generally used. However, in recent time, great attention is being paid to wireless charging techniques. The wireless charging methods include an electromagnetic induction type using an electromagnetic induction and a magnetic resonance type for supplying power to transmitting and receiving ends over the same frequency. Of the wireless charging methods, the electromagnetic induction type is configured such that a coil, which is included in a charging pad, generates an electromagnetic field in response to power applied to the charging pad and a coil included in a battery of a mobile terminal generates an induced current responsive to the electromagnetic field, thereby charging the battery with the induced current. In the electromagnetic induction type charging method, the position of the terminal placed on the charging pad is very important. Consequently, if the position of the terminal is changed on the charging pad or the terminal falls out of the charging pad due to vibration generated from the terminal during a wireless charging, charging efficiency is drastically decreased or charging is unable.

### SUMMARY OF THE INVENTION

Therefore, to overcome the related art problems, an object of the present invention is to provide a mobile terminal, which changes a vibration mode set to the terminal into a ring mode so as to perform a wireless charging, and a wireless charging method thereof.

To achieve these and other advantages and in accordance with the purpose of the present invention, as embodied and broadly described herein, there is provided a wireless charging method for a mobile terminal in which a battery is wirelessly charged using induced current generated from a charging pad, the method including receiving the induced current generated from the charging pad, checking whether the terminal is in a vibration mode upon reception of the induced current, and changing the vibration mode into a ring mode or a mute mode when the terminal is in the vibration mode.

In accordance with one exemplary embodiment, there is provided a mobile terminal including a power reception unit configured to receive induced current generated from a charging pad, a controller configured to check whether the terminal is in a vibration mode when the induced current is received, and to change the vibration mode into a ring mode or a mute mode according to the check result, and a charging unit configured to wirelessly charge the battery using the received induced current according to the control of the controller.

The foregoing and other objects, features, aspects and advantages of the present invention will become more apparent from the following detailed description of the present invention when taken in conjunction with the accompanying drawings.

### BRIEF DESCRIPTION OF THE DRAWINGS

The above and other aspects, features, and advantages of the present invention will become more apparent upon consideration of the following description of preferred embodiments, taken in conjunction with the accompanying drawings.
FIG. 1 is a view of a wireless charging system in accordance with one exemplary embodiment;
FIG. 2 is a sectional view taken along the line A-B of FIG. 1;
FIG. 3A is a block diagram of a mobile terminal in accordance with one exemplary embodiment;
FIG. 3B is a block diagram of a wireless charger in accordance with the one exemplary embodiment;
FIG. 4 is a block diagram showing a configuration of the charging pad in accordance with the one exemplary embodiment;
FIG. 5 is a flowchart showing a wireless charging method for a mobile terminal in accordance with one exemplary embodiment;
FIG. 6 is a screen for setting the ringtone upon the wireless charging of the mobile terminal in accordance with the one exemplary embodiment;
FIG. 7 is a screen for requesting a manual changing of the ringtone upon the wireless charging of the mobile terminal in accordance with the one exemplary embodiment;
FIG. 8 is a flowchart showing a method for guiding an alignment of the mobile terminal in accordance with the one exemplary embodiment; and
FIG. 9 is a screen for guiding the terminal alignment in the mobile terminal.

### DETAILED DESCRIPTION OF PREFERRED EMBODIMENTS

Description will now be given in detail of the preferred embodiments according to the present invention, with reference to the accompanying drawings. Here, suffixes "module" and "unit or portion" for components used herein in description are merely provided only for facilitation of preparing this specification, and thus they are not granted a specific meaning or function.

Mobile terminals described in the present invention may include mobile phones, smart phones, laptop computers, digital broadcasting terminals, personal digital assistants (PDAs), portable multimedia players (PMPs), navigators, and the like. However, it can be easily understood by those skilled in the art that the configurations according to the embodiments disclosed in the specification of the present invention can be applied to stationary terminals, such as digital TV, desktop computer and the like, excluding several cases of being applicable only to mobile terminals.

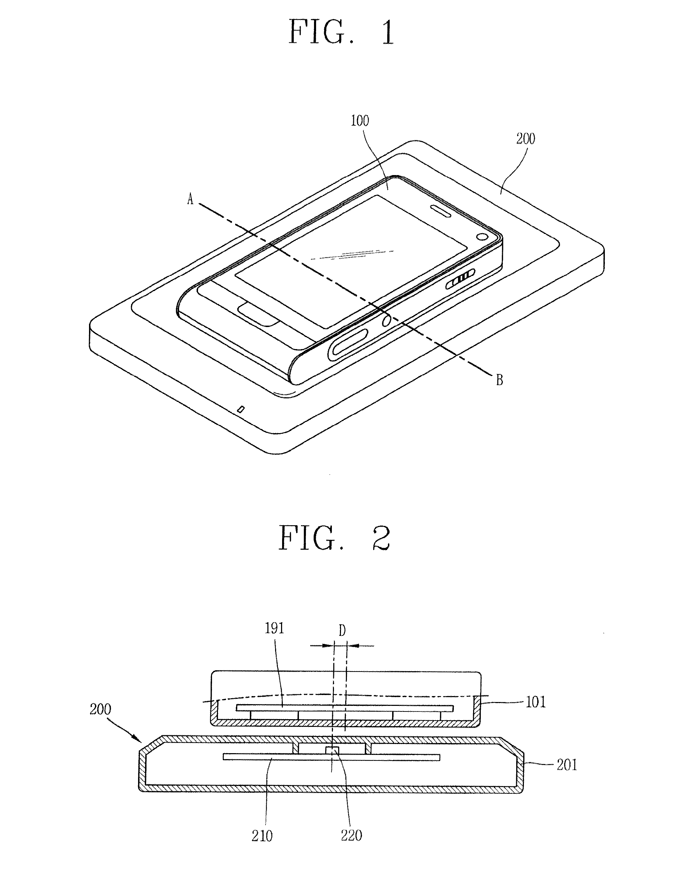

FIG. 1 is a view of a wireless charging system in accordance with one exemplary embodiment, and FIG. 2 is a sectional view taken along the line A-B of FIG. 1.

As shown in FIG. 1, a wireless charging system may include a mobile terminal 100 and a charging pad 200.

The mobile terminal 100 is a wirelessly chargeable terminal, and a battery of the mobile terminal 100 may be charged by using an induced current generated from the charging pad 200. The mobile terminal 100, as shown in FIG. 2, may include a second coil 191 for generating an induced current according to an electromagnetic induction. The second coil 191 may be disposed between the battery and a battery cover 101.

The charging pad 200, as a device for wirelessly charging the battery of the mobile terminal 100, is a power transmitter which sends power needed for the battery charging. The charging pad 200, as shown in FIG. 2, may include a first coil 210 present inside a cover 201 for generating an electromagnetic field in response to power supply, and a sensor 220 for recognizing a contact and/or a position of the mobile terminal 100. The sensor 220 may serve to notify that the mobile terminal 100 is placed on the charging pad 200 and also to help the mobile terminal 100 to be placed on a position with the highest charging efficiency when the mobile terminal 100 is put on the charging pad 200. The highest charging efficiency can be obtained only when a center of the first coil 210 is in alignment with a center of the second coil 191 at the time the mobile terminal 100 is put on the charging pad 200. Hence, in order to make the centers of the primary and second coils 210 and 191 located in alignment with each other, a magnet is installed at the center of the first coil 210, and accordingly, when the center of the second coil 191 is located within a preset radius based upon the center of the first coil 210, the terminal 100 is attracted by a magnetic force, thereby aligning the centers of the first coil 210 and the second coil 191 with each other. Here, if a distance between the centers of the primary and second coils 210 and 191 is out of an allowable distance range D, the charging pad 200 recognizes it as the mobile terminal 100 does not satisfy an alignment condition, so as to send a signal to the mobile terminal 100 to notify impossibility of the wireless charging. That is, when the centers of the primary and second coils 210 and 191 overlap with each other, if the distance between the centers of the first coil 210 and the second coil 191 does not meet the alignment condition, the charging pad 200 does not allow the battery wireless charging of the mobile terminal 100. Here, the charging pad 200 sends to the mobile terminal 100 information relating to deviated direction and distance of the center of the second coil 191 from the center of the first coil 210.

Also, the charging pad 200 may charge a plurality of terminals at the same time. In other words, two or more terminals may be chargeable by being placed on the charging pad 200, and the terminals may be different types of terminals. For instance, a mobile terminal, a multimedia player, PDA and the like may all be placed the charging pad 200 for charging.

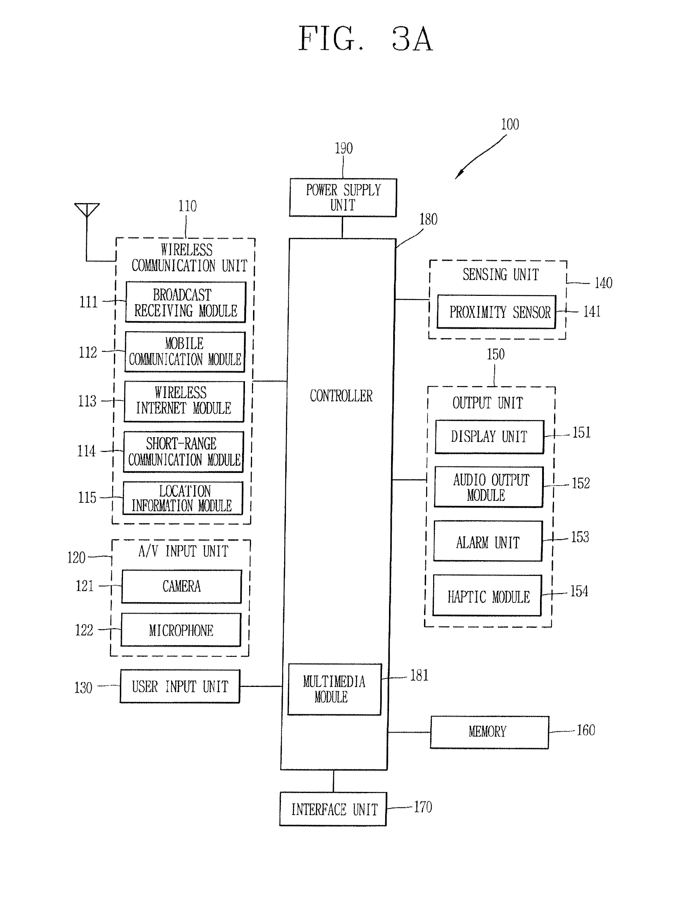

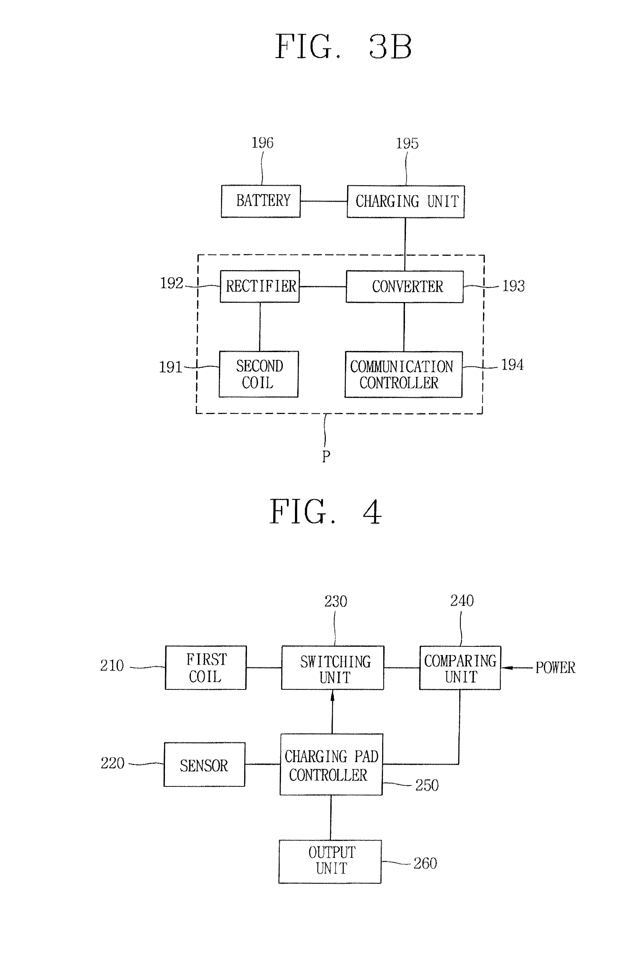

FIG. 3A is a block diagram of a mobile terminal in accordance with one exemplary embodiment, and FIG. 3B is a block diagram of a wireless charger in accordance with the one exemplary embodiment.

The mobile terminal 100 may comprise components, such as a wireless communication unit 110, an AudioNideo (A/V) input unit 120, a user input unit 130, a sensing unit 140, an output unit 150, a memory 160, an interface unit 170, a controller 180, a power supply unit 190 and the like. FIG. 1 shows the mobile terminal 100 having various components, but it is understood that implementing all of the illustrated components is not a requirement. Greater or fewer components may alternatively be implemented.

Hereinafter, each component is described in sequence.

The wireless communication unit 110 may typically include one or more components which permit wireless communications between the mobile terminal 100 and a wireless communication system or between the mobile terminal 100 and a network within which the mobile terminal 100 is located. For example, the wireless communication unit 110 may include a broadcast receiving module 111, a mobile communication module 112, a wireless internet module 113, a short-range communication module 114, a position location module 115 and the like.

The broadcast receiving module 111 receives a broadcast signal and/or broadcast associated information from an external broadcast managing entity via a broadcast channel.

The broadcast channel may include a satellite channel and a terrestrial channel. The broadcast managing entity may indicate a server which generates and transmits a broadcast signal and/or broadcast associated information or a server which receives a pre-generated broadcast signal and/or broadcast associated information and sends them to the portable terminal. The broadcast signal may be implemented as a TV broadcast signal, a radio broadcast signal, and a data broadcast signal, among others. The broadcast signal may further include a data broadcast signal combined with a TV or radio broadcast signal.

The broadcast associated information may indicate information relating to broadcast channels, broadcast programs or broadcast service providers. Further, the broadcast associated information may be provided via a mobile communication network and received by the mobile communication module 112.

The broadcast associated information may be implemented in various formats. For instance, broadcast associated information may include Electronic Program Guide (EPG) of Digital Multimedia Broadcasting (DMB), Electronic Service Guide (ESG) of Digital Video Broadcast-Handheld (DVB-H), and the like.

The broadcast receiving module 111 may be configured to receive digital broadcast signals transmitted from various types of broadcast systems. Such broadcast systems may include Digital Multimedia Broadcasting-Terrestrial (DMB-T), Digital Multimedia Broadcasting-Satellite (DMB-S), Media Forward Link Only (MediaFLO), Digital Video Broadcast-Handheld (DVB-H), Integrated Services Digital Broadcast-Terrestrial (ISDB-T), and the like. The broadcast receiving module 111 may be configured to be suitable for every broadcast system transmitting broadcast signals as well as the digital broadcasting systems.

Broadcast signals and/or broadcast associated information received via the broadcast receiving module 111 may be stored in a suitable device, such as a memory 160.

The mobile communication module 112 transmits/receives wireless signals to/from at least one of network entities (e.g., base station, an external terminal, a server, etc.) on a mobile communication network. Here, the wireless signals may include audio call signal, video call signal, or various formats of data according to transmission/reception of text/multimedia messages.

The wireless internet module 113 supports wireless Internet access for the portable terminal. This module may be internally or externally coupled to the portable terminal 100. Examples of such wireless Internet access may include Wireless LAN (WLAN) (Wi-Fi), Wireless Broadband (Wibro), World Interoperability for Microwave Access (Wimax), High Speed Downlink Packet Access (HSDPA), and the like.

The short-range communication module 114 denotes a module for short-range communications. Suitable technologies for implementing this module may include BLUETOOTH, Radio Frequency IDentification (RFID), Infrared Data Association (IrDA), Ultra-WideBand (UWB), ZigBee, and the like.

The position location module 115 denotes a module for detecting or calculating a position of a portable terminal. An example of the position location module 115 may include a Global Position System (GPS) module.

Referring to FIG. 3A, the A/V input unit 120 is configured to provide audio or video signal input to the mobile terminal. The A/V input unit 120 may include a camera 121 and a microphone 122. The camera 121 receives and processes image frames of still pictures or video obtained by image sensors in a video (telephony) call mode or a capturing mode. The processed image frames may be displayed on a display unit 151.

The image frames processed by the camera 121 may be stored in the memory 160 or transmitted to the exterior via the wireless communication unit 110. Two or more cameras 121 may be provided according to the use environment of the mobile terminal.

The microphone 122 may receive an external audio signal while the mobile terminal is in a particular mode, such as a phone call mode, a recording mode, a voice recognition mode, or the like. This audio signal is processed into digital data. The processed digital data is converted for output into a format transmittable to a mobile communication base station via the mobile communication module 112 in case of the phone call mode. The microphone 122 may include assorted noise removing algorithms to remove noise generated in the course of receiving the external audio signal.

The user input unit 130 may generate input data input by a user to control the operation of the mobile terminal. The user input unit 130 may include a keypad, a dome switch, a touchpad (e.g., static pressure/capacitance), a jog wheel, a jog switch and the like.

The sensing unit 140 provides status measurements of various aspects of the mobile terminal. For instance, the sensing unit 140 may detect an open/close status of the mobile terminal, a change in a location of the mobile terminal 100, a presence or absence of user contact with the mobile terminal 100, the orientation of the mobile terminal 100, acceleration/deceleration of the mobile terminal 100, and the like, so as to generate a sensing signal for controlling the operation of the mobile terminal 100. For example, regarding a slide-type mobile terminal, the sensing unit 140 may sense whether a sliding portion of the mobile terminal is open or closed. Other examples include sensing functions, such as the sensing unit 140 sensing the presence or absence of power provided by the power supply 190, the presence or absence of a coupling or other connection between the interface unit 170 and an external device and the like. Moreover, the sensing unit 140 may include a proximity sensor 141.

The output unit 150 is configured to output an audio signal, a video signal or an alarm signal. The output unit 150 may include a display unit 151, an audio output module 152, an alarm 153, a haptic module 154 and the like.

The display unit 151 may output information processed in the mobile terminal 100. For example, when the mobile terminal is operating in a phone call mode, the display unit 151 will provide a User Interface (Ul) or a Graphic User Interface (GUI) which includes information associated with the call. As another example, if the mobile terminal is in a video call mode or a capturing mode, the display unit 151 may additionally or alternatively display images captured and/or received, Ul, or GUI.

The display unit 151 may be implemented using, for example, a Liquid Crystal Display (LCD), a Thin Film Transistor-Liquid Crystal Display (TFT-LCD), an Organic Light-Emitting Diode (OLED), a flexible display, a three-dimensional (3D) display, or the like.

Some of the displays can be configured to be transparent such that it is possible to see the exterior therethrough. These displays may be called transparent displays. A representative example of the transparent display may include a Transparent Organic Light Emitting Diode (TOLED), and the like. The rear surface of the display unit 151 may also be implemented to be optically transparent. Under this configuration, a user can view an object positioned at a rear side of a terminal body through a region occupied by the display unit 151 of the terminal body.

The display unit 151 may be implemented in two or more in number according to a configured aspect of the mobile terminal 100. For instance, a plurality of the display units 151 may be arranged on one surface to be spaced apart from or integrated with each other, or may be arranged on different surfaces.

Here, if the display unit 151 and a touch sensitive sensor (referred to as a 'touch sensor') have a layered structure therebetween, the structure may be referred to as 'touch screen'. In this structure, the display unit 151 may be used as an input device rather than an output device. The touch sensor may be implemented as a touch film, a touch sheet, a touch pad, and the like.

The touch sensor may be configured to convert changes of a pressure applied to a specific part of the display unit 151, or a capacitance occurring from a specific part of the display unit 151, into electric input signals. Also, the touch sensor may be configured to sense not only a touched position and a touched area, but also a touch pressure.

When touch inputs are sensed by the touch sensors, corresponding signals are transmitted to a touch controller (not shown). The touch controller processes the received signals, and then transmits corresponding data to the controller 180. Accordingly, the controller 180 may sense which region of the display unit 151 has been touched.

As shown in FIG. 3A, a proximity sensor 141 may be arranged at an inner region of the mobile terminal 100 covered by the touch screen, or near the touch screen. The proximity sensor 141 indicates a sensor to sense presence or absence of an object approaching to a surface to be sensed, or an object disposed near a surface to be sensed, by using an electromagnetic field or infrared rays without a mechanical contact. The proximity sensor 141 has a longer lifespan and a more enhanced utility than a contact sensor.

The proximity sensor 141 may include a transmissive type photoelectric sensor, a direct reflective type photoelectric sensor, a mirror reflective type photoelectric sensor, a high-frequency oscillation proximity sensor, a capacitance type proximity sensor, a magnetic type proximity sensor, an infrared rays proximity sensor, and so on. When the touch screen is implemented as a capacitance type, proximity of a pointer to the touch screen is sensed by changes of an electromagnetic field. In this case, the touch screen (touch sensor) may be categorized into a proximity sensor.

Hereinafter, for the sake of brief explanation, a status that the pointer is positioned to be proximate onto the touch screen without contact will be referred to as 'proximity touch', whereas a status that the pointer substantially comes in contact with the touch screen will be referred to as 'contact touch'. For the position corresponding to the proximity touch of the pointer on the touch screen, such position corresponds to a position where the pointer faces perpendicular to the touch screen upon the proximity touch of the pointer.

The proximity sensor 141 senses proximity touch, and proximity touch patterns (e.g., distance, direction, speed, time, position, moving status, etc.). Information relating to the sensed proximity touch and the sensed proximity touch patterns may be output onto the touch screen.

The audio output module 152 may output audio data received from the wireless communication unit 110 or stored in the memory 160, in a call-receiving mode, a call-placing mode, a recording mode, a voice recognition mode, a broadcast reception mode, and so on. The audio output module 152 may output audio signals relating to functions performed in the mobile terminal 100, e.g., sound alarming a call received or a message received, and so on. The audio output module 152 may include a receiver, a speaker, a buzzer, and so on.

The alarm 153 outputs signals notifying occurrence of events from the mobile terminal 100. The events occurring from the mobile terminal 100 may include call received, message received, key signal input, touch input, and so on. The alarm 153 may output not only video or audio signals, but also other types of signals such as signals notifying occurrence of events in a vibration manner. Since the video or audio signals can be output through the display unit 151 or the audio output unit 152, the display unit 151 and the audio output module 152 may be categorized into a part of the alarm 153.

The haptic module 154 generates various tactile effects which a user can feel. A representative example of the tactile effects generated by the haptic module 154 includes vibration. Vibration generated by the haptic module 154 may have a controllable intensity, a controllable pattern, and so on. For instance, different vibration may be output in a synthesized manner or in a sequential manner.

The haptic module 154 may generate various haptic effects, including not only vibration, but also arrangement of pins vertically moving with respect to a skin being touched (contacted), air injection force or air suction force through an injection hole or a suction hole, touch by a skin surface, presence or absence of contact with an electrode, effects by stimulus such as an electrostatic force, reproduction of cold or hot feeling using a heat absorbing device or a heat emitting device, and the like.

The haptic module 154 may be configured to transmit tactile effects (signals) through a user's direct contact, or a user's muscular sense using a finger or a hand. The haptic module 154 may be implemented in two or more in number according to the configuration of the mobile terminal 100.

The memory 160 may store a program for the processing and control of the controller 180. Alternatively, the memory 160 may temporarily store input/output data (e.g., phonebook data, messages, still images, video and the like). Also, the memory 160 may store data related to various patterns of vibrations and audio output upon the touch input on the touch screen.

Also, the memory 160 may store a wireless charging application downloaded from an application providing server (e.g., App store). The wireless charging application is a program for controlling a wireless charging of the battery, and accordingly a ringtone (notification mode) may be selectively set upon the wireless charging or upon completion of the wireless charging through the corresponding program. Here, the ringtone relates to outputting of an alarm (alert, notice) signal for allowing a user to recognize the moment when a text message or an incoming call is received, and may include a ring mode, a vibration mode (manner mode), a mute mode(silent mode) and the like.

The memory 160 may be implemented using any type of suitable storage medium including a flash memory type, a hard disk type, a multimedia card micro type, a memory card type (e.g., SD or DX memory), Random Access Memory (RAM), Static Random Access Memory (SRAM), Read-Only Memory (ROM), Electrically Erasable Programmable Read-only Memory (EEPROM), Programmable Read-only Memory (PROM), magnetic memory, magnetic disk, optical disk, and the like. Also, the mobile terminal 100 may operate a web storage which performs the storage function of the memory 160 on the Internet.

The interface unit 170 may generally be implemented to interface the mobile terminal with external devices. The interface unit 170 may allow a data reception from an external device, a power delivery to each component in the mobile terminal 100, or a data transmission from the mobile terminal 100 to an external device. The interface unit 170 may include, for example, wired/wireless headset ports, external charger ports, wired/wireless data ports, memory card ports, ports for coupling devices having an identification module, audio Input/Output (I/O) ports, video I/O ports, earphone ports, and the like.

The identification module may be configured as a chip for storing various information required to authenticate an authority to use the mobile terminal 100, which may include a User Identity Module (UIM), a Subscriber Identity Module (SIM), and the like. Also, the device having the identification module (hereinafter, referred to as 'identification device') may be implemented in a type of smart card. Hence, the identification device can be coupled to the mobile terminal 100 via a port.

Also, the interface unit 170 may serve as a path for power to be supplied from an external cradle to the mobile terminal 100 when the mobile terminal 100 is connected to the external cradle or as a path for transferring various command signals inputted from the cradle by a user to the mobile terminal 100. Such various command signals or power inputted from the cradle may operate as signals for recognizing that the mobile terminal 100 has accurately been mounted to the cradle.

The controller 180 typically controls the overall operations of the mobile terminal 100. For example, the controller 180 performs the control and processing associated with telephony calls, data communications, video calls, and the like. The controller 180 may include a multimedia module 181 which provides multimedia playback. The multimedia module 181 may be configured as part of the controller 180 or as a separate component.

The controller 180 can perform a pattern recognition processing so as to recognize writing or drawing input on the touch screen as text or image.

The controller 180 may perform a wired charging or wireless charging operation responsive to a user input or an internal input. Here, the internal input may be a signal for informing that an induced current generated from the second coil within the terminal has been detected. The controller 180 then charges the battery in a wireless manner using the induced current when the induced current generated from the charging pad is detected.

The controller 180 may check whether or not the ringtone of the terminal is in a vibration mode upon entering a wireless charging mode. That is, the controller 180 starts wireless charging of the battery and checks whether the ringtone of the terminal has been set to the vibration mode. If the ringtone is the vibration mode, then the controller 180 checks whether or not a ringtone change has been set. If so, the controller 180 changes the ringtone set to the vibration mode into a ring mode or a mute (silent) mode based upon the preset information.

Also, the controller 180 may check whether or not the position of the terminal placed on the charging pad 200 upon the wireless charging meets an alignment condition, and if the terminal position does not meet the alignment condition, the controller 180 may output an alarm sound or a message. In addition, the controller 180 may guide the alignment of the terminal to meet the alignment condition. In other words, the controller 180 receives from the charging pad 200 information relating to a deviated direction and distance of the second coil 191 from the center of the first coil 210, and then guides the alignment of the terminal based upon the received information.

The power supply unit 190 provides power required by various components under the control of the controller 180. The provided power may be internal power, external power, or combination thereof.

The power supply unit 190 may include a battery 196 for supplying power to each component of the mobile terminal 100, and a wireless charging device for charging the battery 196 via a cable or wirelessly.

The wireless charging device, as shown in FIG. 3B, may include a second coil 191, a rectifier 192, a converter 193, a communication controller 194, a charging unit 195 and a battery 196. Here, the second coil 191, the rectifier 192, the converter 193 and the communication controller 194 may be referred to as a power reception unit P. The power reception unit P may serve to receive the induced current generated from the charging pad 200.

The second coil 191 may generate an induced current in response to the change in an electromagnetic field generated from the first coil 210 of the charging pad 200. The second coil 191 may generate the induced current by receiving an induced current generated from the first coil 210.

The rectifier 192 may be an alternative current (AC) - direct current (DC) converter for converting the induced current received via the second coil 191 into DC power (or DC voltage).

The converter 193 may convert the DC power output from the rectifier 192 into a preset voltage. That is, the converter 193 may serve to convert the DC power into an appropriate voltage for battery charging. For instance, if the DC power output from the rectifier 192 is 9V, the converter 193 converts 9V into 5V.

The communication controller 194 may perform communications with the charging pad 200. The communication controller 194 may request an authentication as to whether or not the corresponding terminal is a chargeable device from the charging pad 200. The communication controller 194 may send identification information, such as a device number of the battery or the like to the charging pad 200 upon the authentication request.

The charging unit 195 may charge the battery 196 by using the induced current received via the second coil 191. In other words, the charging unit 195 may supply the induced current, which is generated from the second coil 191 in response to an electromagnetic induction generated from the charging pad 200, to the battery 196. The charging unit 195 may include a charging circuit for controlling battery charging, and anti-overcurrent/overvoltage circuit for preventing overcurrent and overvoltage.

Various embodiments described herein may be implemented in a computer-readable medium using, for example, software, hardware, or some combination thereof.

For a hardware implementation, the embodiments described herein may be implemented within one or more of Application Specific Integrated Circuits (ASICs), Digital Signal Processors (DSPs), Digital Signal Processing Devices (DSPDs), Programmable Logic Devices (PLDs), Field Programmable Gate Arrays (FPGAs), processors, controllers, micro-controllers, micro processors, other electronic units designed to perform the functions described herein, or a selective combination thereof. In some cases, such embodiments are implemented by the controller 180.

For software implementation, the embodiments such as procedures and functions may be implemented together with separate software modules each of which performs at least one of functions and operations. The software codes can be implemented with a software application written in any suitable programming language. Also, the software codes may be stored in the memory 160 and executed by the controller 180.

FIG. 4 is a block diagram showing a configuration of the charging pad in accordance with the one exemplary embodiment.

Referring to FIG. 4, the charging pad 200 may include a first coil 210, a sensor 220, a switching unit 230, a comparing unit 240, a charging pad controller 250 and an output unit 260.

The first coil 210 may generate an electromagnetic field when power is applied thereto. The first coil 210 may be implemented as a solenoid. Also, the electromagnetic field generated from the first coil 210 may induce a magnetic field from the second coil 191 of the mobile terminal 100 so as to allow generation of an induced current from the first coil 191.

The sensor 220 may detect a contact of the mobile terminal 100 when the mobile terminal 100 is put on the charging pad 200, and check the position of the mobile terminal 100 on the charging pad 200.

The switching unit 230 may supply external power to the first coil 210 or block the external power supplied to the first coil 210 according to the control of the charging pad controller 250.

The comparing unit 240 may check whether or not the charging pad 200 normally operates. The comparing unit 240 may detect a voltage or current of power supplied from the exterior, and then check whether the detected voltage or current exceeds a threshold value. The comparing unit 240 may include a resistance 241 for detecting the voltage or current of the external power, and a comparator for comparing the detected voltage or current value of the power with the threshold value to output the comparison result. For example, the comparator 240 checks whether or not the externally applied power exceeds 5V to output the check result to the charging pad controller 250. The charging pad controller 250 then controls the switching unit 230 to block power supplied to the second coil 210 when the externally applied power exceeds 5V.

The charging pad controller 250 may control the switching unit 230 according to the check result sent from the comparing unit 240. The charging pad controller 250 may also perform communications with the mobile terminal 100 and check a charged state of the battery 196 through the communications. For example, the charging pad controller 250 can perform communications with the controller 180 of the mobile terminal 100 via the short-range communication, such as Bluetooth, thereby checking the charged state of the battery 196.

Also, the charging pad controller 250 may check the position of the mobile terminal 100 on the charging pad 200 via the sensor 220 and undergo the authentication process via the communication with the communication controller 194 of the mobile terminal 100, thereby checking whether the mobile terminal 100 is a wirelessly chargeable terminal. Here, the charging pad controller 250 may also receive information relating to a model of the mobile terminal 100 or the battery 196. Hence, the charging pad controller 250 may check information related to the second coil 191 (e.g., the position of the second coil 191) based upon the model related information. For example, the charging pad controller 250 may access the position of the second coil 191 of the mobile terminal 100 from second coil position information, which is stored for each type in a memory (not shown).

The charging pad controller 250 may check whether or not the mobile terminal 100 placed on the charging pad 200 meets the alignment condition. For example, if a sensor, such as a hall sensor, is disposed at the center of the first coil 210 and a magnet is disposed at the center of the second coil 191 such that the center of the second coil 191 is aligned with the center of the first coil 210 in an overlapped state, the charging pad controller 250 considers it as the mobile terminal 100 meets the alignment condition. If the mobile terminal 100 does not satisfy the alignment condition, the charging pad controller 250 sends a signal to the mobile terminal 100 to inform that the charging is impossible.

The output unit 260 may display a charged state according to the control of the charging pad controller 250. The output unit 260 may be implemented as a light emitting diode and/or an LCD.

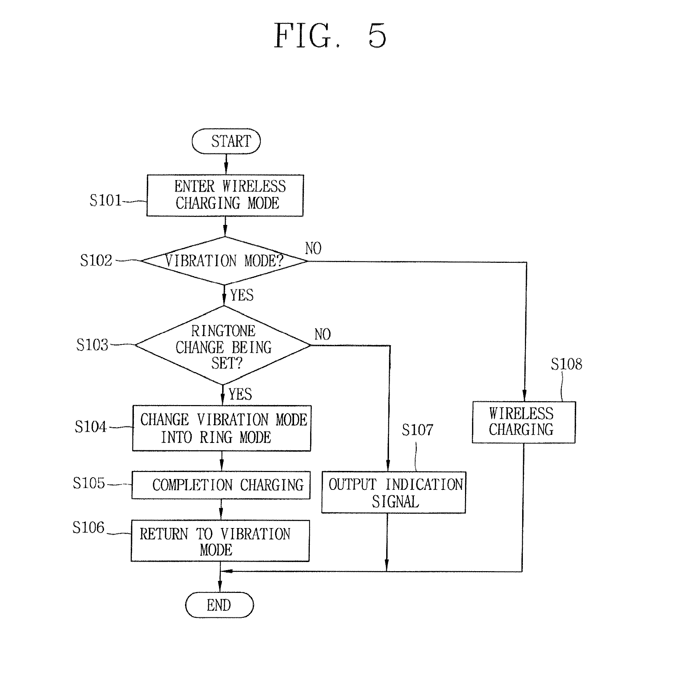

FIG. 5 is a flowchart showing a wireless charging method for a mobile terminal in accordance with one exemplary embodiment, which exemplarily illustrates a case where the mobile terminal is placed on a charging pad.

Referring to FIG. 5, the controller 180 enters a wireless charging mode responsive to a user input or an internal input (S101). The controller 180 recognizes the existence of a wireless charging request if a voltage generated from the power reception unit P of the mobile terminal 100 is detected. In other words, if an induced current is generated from the second coil 191, the controller 180 enters the wireless charging mode. The controller 180 may also perform a battery charging using the generated induced current.

Upon entering the wireless charging mode, the controller 180 checks whether or not the ringtone (notification mode) has been set to a vibration mode (manner mode) (S102). Here, the ringtone may include a vibration mode, a ring mode, a mute mode and the like.

If the ringtone has been set to the vibration mode, the controller 180 checks whether or not the ringtone change has been set (S103). That is, when the ringtone has been set to the vibration mode upon a wireless charging, the controller 180 checks whether a function of changing the vibration mode into a ring mode or a mute mode has been set. The ringtone change may be set by a user in advance.

If the ringtone change is in a set state, the controller 180 changes the vibration mode of the ringtone into the ring mode or the mute mode based upon the preset setup information (S104). The controller 180 may perform the wireless charging of the battery 196 at the same time of the entry into the wireless charging mode, or perform charging of the battery 196 after changing the ringtone. Also, the controller 180 may output the charged state of the battery 196 on a display screen while charging the battery 196.

Upon completion of the battery charging, the controller 180 returns the changed ringtone to the previous mode (S105 and S106). The controller 180 may change the ringtone back into the vibration mode, which is the mode prior to changing the ringtone into the ring mode or the mute mode, based upon the preset setup information, or maintain the changed ringtone.

If the ringtone change has not been set at step S103, the controller 180 may output a message on the display unit 151 to inform that the vibration mode should be manually changed into the ring mode or the mute mode (S107). Here, the controller 180 may also output an effect sound.

If the ringtone is not the vibration mode at step S102, the controller 180 performs the wireless charging of the battery 196 (S108). Upon completion of the wireless charging, the controller 180 may output an effect sound and/or a message for informing the completion of the charging. If a touch input on the display screen of the mobile terminal 100 is detected or a specific key of the user input unit 130 is entered during the wireless charging, the controller 180 displays the charged state (charged level) of the battery 196.

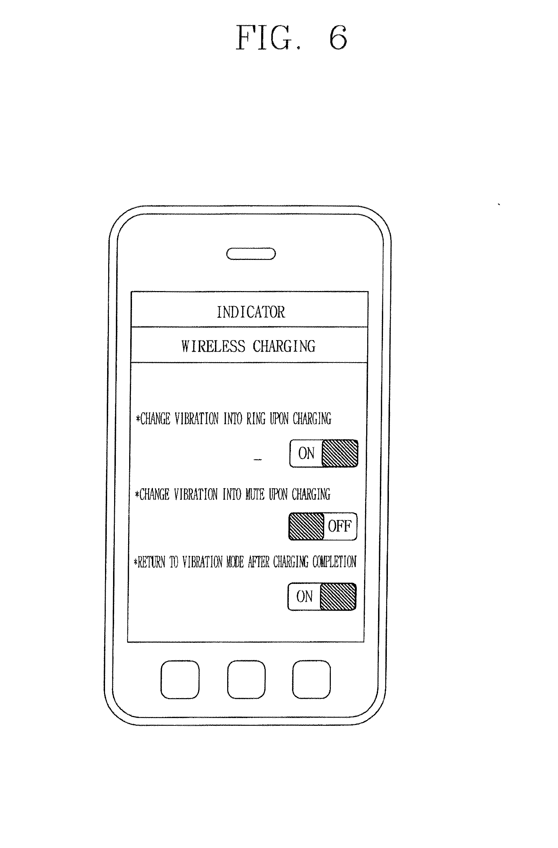

FIG. 6 is a screen for setting the ringtone upon the wireless charging of the mobile terminal in accordance with the one exemplary embodiment.

First, the controller 180 executes a wireless charging application stored in the memory 160 in response to a user input. Upon the execution of the wireless charging application, the controller 180 outputs an execution screen, as shown in FIG. 6, on the display unit 151.

It is available to set the function of changing the vibration mode into the ring mode or the mute mode during charging and also set whether to return the changed ringtone to the state prior to the change after charging completion.

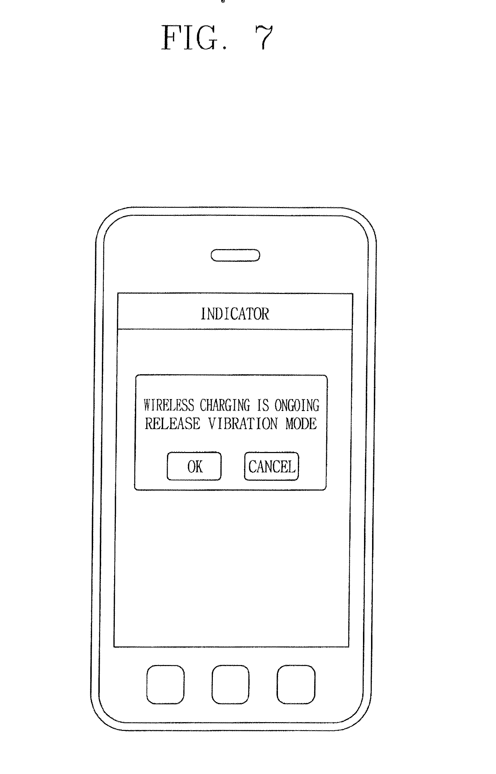

FIG. 7 is a screen for requesting a manual change of the ringtone upon the wireless charging of the mobile terminal in accordance with the one exemplary embodiment.

If the ringtone of the mobile terminal 100 is set to the vibration mode but the ringtone change is not set upon the wireless charging, the controller 180 displays a message for requesting a manual change of the ringtone on the display screen, as shown in FIG. 7. When the user selects OK after checking the message displayed on the display screen, the controller 180 executes the wireless charging application for changing the ringtone shown in FIG. 6. Afterwards, as mentioned above, the ringtone change function may be set. Upon setting the ringtone change function, the controller 180 immediately applies the set information to change the ringtone from the vibration mode into the ring mode or the mute mode.

Alternatively, after checking the message output on the display screen, the controller 180 may set the ringtone according to a user input entered via the user input unit 130. For example, when the terminal is in a manner mode (vibration mode), the controller 180 releases the manner mode when a manner mode setup/release key is input by a user. Alternatively, if the ringtone is in the vibration mode, the controller 180 changes the ringtone from the vibration mode into the ring mode or the mute mode according to a user's menu manipulation.

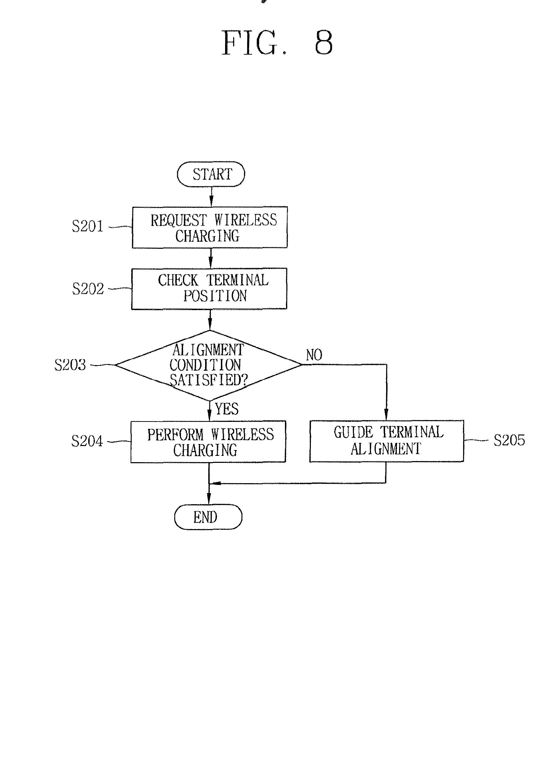

FIG. 8 is a flowchart showing a method for guiding an alignment of a mobile terminal in accordance with the one exemplary embodiment.

Referring to FIG. 8, the controller 180 receives a wireless charging request (S201). Here, the controller 180 may recognize a detection as the wireless charging request when an induced current generated from the second coil 191 is detected.

In response to the wireless charging request, the controller 180 checks the position of the terminal 100 on the charging pad 200. Here, the controller 180 may receive position information relating to the terminal 100 from the charging pad 200. The charging pad 200 may provide the controller 180 with information relating to the deviated direction and distance (level) of the center of the second coil 191 within the terminal 100 with respect to the center of the first coil 210 within the charging pad 200.

When the position of the terminal 100 meets an alignment condition, the controller 180 executes the wireless charging of the battery 196 (S204). The alignment condition indicates that the distance between centers of the primary and second coils is within an allowable distance range.

In the meantime, if the terminal position does not meet the alignment condition, the controller 180 guides the alignment of the terminal such that the terminal can satisfy the alignment condition (S205). The controller 180 then guides the direction and distance that the terminal should move based upon information relating to the deviated direction and distance provided from the charging pad 200.

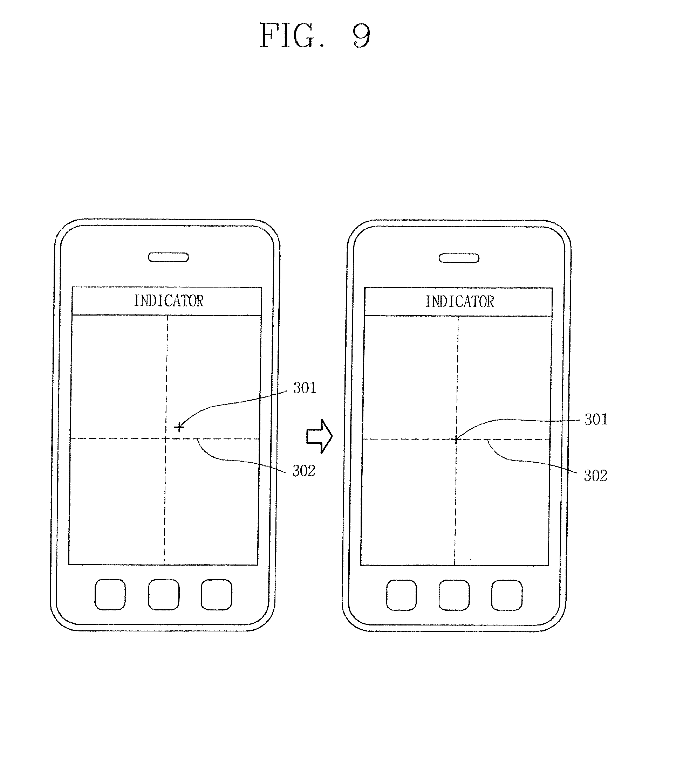

For instance, referring to FIG. 9, an alignment mark 301, which indicates the center of the first coil 210 mounted in the charging pad 200, is represented, and guide lines 302, which guide the center of the second coil 191 to be aligned on the alignment mark 301, is displayed on a display screen. A user then moves the mobile terminal 100 such that the intersection between the guide lines 302 output on the display screen can overlap with the alignment mark 301.

Also, in accordance with one embodiment of the present invention, the aforesaid methods may be implemented in a medium having a program recorded as computer-readable codes. The computer-readable medium may include all types of recording apparatuses each storing data which is readable by a computer system. Examples of such computer-readable media may include ROM, RAM, CD-ROM, magnetic tape, floppy disk, optical data storage element and the like. Also, such computer-readable medium may be implemented in a type of a carrier wave (e.g., a transmission via an Internet). The computer can include the controller 180 of the mobile terminal.

The configurations and methods of the previously described embodiments may not be limitedly applied to the aforementioned mobile terminal but it would be understood that the present invention can be implemented by selectively combining the aforementioned embodiment(s) entirely or partially

In accordance with at least one embodiment with the aforesaid configuration, when a terminal is in a vibration mode upon wireless charging, the vibration mode may be changed into a ring mode, thereby avoiding the change in a position of the terminal on a charging pad, which may be caused due to vibration generated from the terminal, resulting in maintenance of the same charging efficiency until a battery charging is completed.

The foregoing embodiments and advantages are merely exemplary and are not to be construed as limiting the present disclosure. The present teachings can be readily applied to other types of apparatuses. This description is intended to be illustrative, and not to limit the scope of the claims. Many alternatives, modifications, and variations will be apparent to those skilled in the art. The features, structures, methods, and other characteristics of the exemplary embodiments described herein may be combined in various ways to obtain additional and/or alternative exemplary embodiments.

As the present features may be embodied in several forms without departing from the characteristics thereof, it should also be understood that the above-described embodiments are not limited by any of the details of the foregoing description, unless otherwise specified, but rather should be construed broadly within its scope as defined in the appended claims, and therefore all changes and modifications that fall within the metes and bounds of the claims, or equivalents of such metes and bounds are therefore intended to be embraced by the appended claims.

## Claims

1. A wireless charging method for a mobile terminal in which a battery is wirelessly charged using induced current generated from a charging pad, the method comprising:
receiving (S101) the induced current generated from the charging pad (200);
checking a notification mode set for the terminal (100) upon reception of the induced current; and
setting the notification mode to a ring mode or a mute mode according to the check result.

2. The method of claim 1, wherein the checking step is to check whether the terminal (100) is in a vibration mode (S102).

3. The method of claim 1, wherein checking the notification mode comprises checking whether the terminal placed on the charging pad (200) meets an alignment condition.

4. The method of claim 3, further comprising guiding the alignment of the terminal (100) when the terminal does not meet the alignment condition.

5. The method of any one of claims 3 or 4, wherein the alignment condition comprises that a distance between a center of a coil (220) mounted in the charging pad (200) and a center of a coil mounted in the mobile terminal (100) is within an allowable distance range.

6. The method of any one of claims 1 to 5, wherein setting to the ring mode or the mute mode comprises:
checking whether a notification mode change has been set when the terminal (100) is in a vibration mode (S103); and
changing (S104) the vibration mode into the ring mode or the mute mode according to preset information when the notification mode change has been set.

7. The method of claim 6, wherein when the notification mode change has not been set, an indication of requesting the notification mode change is output.

8. The method of any one of claims 1 to 7, further comprising returning a notification mode of the terminal (100) to a mode prior to changing into the ring mode or the mute mode when the battery charging is completed.

9. The method of claim 8, wherein the returning step is to change the changed ring mode or mute mode into the vibration mode.

10. A mobile terminal comprising:
a power reception unit (P) configured to receive induced current generated from a charging pad (200);
a controller (180) configured to check a notification mode set for the terminal (100) when the induced current is received, and to set the notification mode to a ring mode or a mute mode according to the check result; and
a charging unit (195) configured to wirelessly charge the battery (196) using the received induced current according to the control of the controller (180).

11. The terminal of claim 10, wherein the charging pad comprises:
a first coil (210) configured to generate an electromagnetic field upon power being applied thereto;
a comparing unit (240) configured to compare the applied power with a threshold value;
a switching unit (230) configured to supply or block the power to the first coil (210); and
a charging pad controller (250) configured to control the switching unit (230) according to the comparison result.

12. The terminal of claim 11, further comprising a sensor (220) configured to detect a contact and/or a position of the mobile terminal (100) on the charging pad (200).

13. The terminal of any one of claims 10 to 12, wherein the power reception unit comprises:
a second coil (191) configured to receive the induced current generated from the charging pad (200);
a rectifier (192) configured to convert the induced current into a direct current power; and
a converter (193) configured to convert the converted direct current power into a preset voltage.

14. The terminal of any one of claims 10 to 13, wherein the controller (180) checks whether or not the terminal on the charging pad meets an alignment condition upon wireless charging, and guides the alignment of the terminal (100) according to the check result.

15. The terminal of any one of claims 10 to 14, wherein the controller (180) checks whether the terminal (100) is in a vibration mode.

16. The terminal of claim 15, wherein the controller (180) checks whether or not a notification mode change has been set when the terminal (100) is in the vibration mode.

17. The terminal of claim 16, wherein the controller (180) changes the vibration mode into a ring mode or a mute mode based upon preset information when the notification mode change has been set.

18. The terminal of claim 17, wherein the controller (180) returns the changed ring mode or mute mode to the vibration mode when the wireless charging of the battery is completed.

19. The terminal of claim 16, wherein the controller (180) outputs an indication of requesting the notification mode change when the notification mode change has not been set.

20. The terminal of claim 15, wherein the controller (180) wirelessly charges the battery (196) using the induced current when the mobile terminal (180) is not in the vibration mode.
